# EUROPEAN PATENT APPLICATION

(11) **EP 0 879 986 A2**
(43) Date of publication of application: **25.11.1998**
(21) Application number: 98109019.4
(22) Date of filing: 18.05.1998
(51) Int. Cl.: F16L 39/04

(54) **A connecting device for connecting pipes**

(30) Priority: 19.05.1997 JP 128649/97
(71) Applicant: TOYOTA JIDOSHA KABUSHIKI KAISHA, Aichi (JP)
(72) Inventor: Harada, Kenichi, Toyota-shi, Aichi-ken, 471-8571 (JP); Kaneko, Kenichi, Toyota-shi, Aichi-ken, 471-8571 (JP)
(74) Representative: Pellmann, Hans-Bernd, Dipl.-Ing.

(57) **Abstract**

According to the present invention, there is provided a connecting device for connecting a first pipe, the passage of which is divided into two passages by a first separating plate, to a second pipe, the passage of which is divided into two passages by a second separating plate. The connecting device comprises a closing member for closing a clearance formed between the first and second separating plates when the first and second pipes are connected to each other, the closing member being relatively movable with respect to both the first and second separating plates.

## Description

### BACKGROUND OF THE INVENTION

### 1. Field of the Invention

The invention relates to a connecting device for connecting dual pipes to each other, and a method for connecting dual pipes to each other by means of the connecting device.

### 2. Description of the Related Art

The exhaust gas is discharged from an engine via an exhaust pipe. If the engine has several cylinders therein, exhaust pipes are connected to the corresponding cylinders of the engine. To reduce the overall size of the exhaust pipes, the pipes are combined downstream of the engine.

The exhaust gas is cyclically discharged from the cylinder. Therefore, the exhaust gas flow has a frequency. If the exhaust pipes are combined immediately downstream of the engine, the frequency of the exhaust gas flow discharged from one of the cylinders may influence the discharge of the exhaust gas from other cylinders. As a result, the amount of the exhaust gas discharged from the other cylinders is decreased.

To prevent the decrease of the amount of the exhaust gas discharged from the other cylinders and reduce the size of the exhaust pipes, Japanese Unexamined Utility Model Publication No. 60-32520 proposes an exhaust pipe, the interior of which is divided into two passages by a separating plate. Such a pipe is called "dual pipe".

When dual pipes are butted to each other to connect the dual pipes to each other, the end faces of the separating plates have to be sealingly connected to each other. However, if one of the separating plates is too long, the separating plates abut against each other so that the dual pipes cannot be connected to each other.

On the other hand, if one of the separating plates is too short, a clearance will be formed between the separating plates.

In the above mentioned Japanese Unexamined Utility Model Publication No. 60-32520, a groove is formed in the top end of one of the separating plates. The top end of the other separating plate is inserted into the groove to prevent the forming of the clearance.

The dual pipes may vibrate due to the operation of the engine. Therefore, according to the Japanese Unexamined Utility Model Publication No. 60-32520, the top ends of the separating plates are damaged. As a result, the two exhaust passages in the dual pipes can communicate with each other.

Therefore, the object of the invention is to provide a connecting device for connecting pipes to each other so that the damage to the top ends of the separating plates is prevented when the pipes vibrate.

### SUMMARY OF THE INVENTION

According to the invention, there is provided a connecting device for connecting a first pipe, the passage of which is divided into two passages by a first separating plate, to a second pipe, the passage of which is divided into two passages by a second separating plate, comprising: a closing member for closing a clearance formed between the first and second separating plates when the first and second pipes are connected to each other, the closing member being relatively movable with respect to both the first and second separating plates.

Further, according to the invention, the closing member is movably mounted on an end of the first separating plate, is in contact with a top end of the second separating plate when the first and second pipes are connected to each other, and is movable in the longitudinal direction of the first separating plate.

Further, according to the invention, the closing member has a spherical top face, the second separating plate has a spherical top face which is complementary to the spherical top face of the closing member, and the spherical top face of the closing member is in contact with the spherical top face of the second separating plate when the first and second pipes are connected to each other.

Further, according to the invention, the closing member has a cylindrical top face, the second separating plate has a flat top face, and the cylindrical top face of the closing member is in contact with the flat top face of the second separating plate when the first and second pipes are connected to each other.

Further, according to the invention, the closing member is movably mounted on an end of the first separating plate, is in contact with the second separating plate when the first and second pipes are connected to each other, and is rotationally movable with respect to the first separating plate.

Further, according to the invention, the closing member is supported on an end of the first separating plate by means of biasing means for biasing the closing member toward the second separating plate.

Further, according to the invention, the biasing means comprises a spring.

Further, according to the invention, the closing member is provided with a groove for receiving the spring therein.

Further, according to the invention, the closing member comprises a lubricating member to be in contact with the second separating plate when the first and second pipes are connected to each other.

Further, according to the invention, the lubricating member comprises a lubricating material and an electrically conductive material which is welded on the closing member.

Further, according to the invention, the electrical conductive material comprises electrically conductive plates, the lubricating material comprises lubricating plates, and the lubricating member is made by alternatively stacking the electrically conductive plates and the lubricating plates.

Further, according to the invention, the closing member has a crenellated face, and the lubricating member is press-fit on the crenellated face.

Further, according to the invention, wherein the closing member is temporarily fixed onto the first separating plate so that the clearance exists before the closing member closes the clearance.

Further, according to the invention, the first separating plate is provided with a hole, and the closing member is provided with a hole, and is temporarily fixed onto the first separating plate by inserting a temporary fixing member which is made of a combustible material into the holes.

Further, according to the invention, when the closing member closes the clearance, the hole of the first separating plate is closed with the closing member while the hole of the closing member is closed with the first separating plate.

Further, according to the invention, the closing member engages with an inner wall face of the first pipe to temporarily fix the closing member onto the first separating plate before the closing member closes the clearance.

Further, according to the invention, the first pipe has a spherical top face, the second pipe has a spherical top face which is complementary to the spherical top face of the first pipe, and the spherical top face of the first pipe is in contact with the spherical top face of the second pipe when the first and second pipes are connected to each other.

According to the invention, there is provided a method for connecting a first pipe, the passage of which is divided into two passages by a first separating plate, to a second pipe, the passage of which is divided into two passages by a second separating plate, comprising steps of: temporarily fixing a closing member for closing a clearance formed between the first and second separating plates onto the first separating plate so that the clearance exists; connecting the first and second pipes to each other; and releasing the closing member to close the clearance.

Further, according to the invention, the closing member is relatively movable with respect to both the first and second separating plates.

Further, according to the invention, the closing member is in contact with a top end of the second separating plate when the first and second pipes are connected to each other, and is movable in a longitudinal direction of the first separating plate.

Further, according to the invention, the closing member has a spherical top face, the second separating plate has a spherical top face which is complementary to the spherical top face of the closing member, and the spherical top face of the closing member is in contact with the spherical top face of the second separating plate when the first and second pipes are connected to each other.

Further, according to the invention, the closing member has a cylindrical top face, the second separating plate has a flat top face, and the cylindrical top face of the closing member is in contact with the flat top face of the second separating plate when the first and second pipes are connected to each other.

Further, according to the invention, the closing member is in contact with the second separating plate when the first and second pipes are connected to each other, and is rotationally movable with respect to the first separating plate.

Further, according to the invention, the closing member is supported on an end of the first separating plate by means of biasing means for biasing the closing member toward the second separating plate.

Further, according to the invention, the biasing means comprises a spring.

Further, according to the invention, the closing member is provided with a groove for receiving the spring therein.

Further, according to the invention, the closing member comprises a lubricating member to be in contact with the second separating plate when the first and second pipes are connected to each other.

Further, according to the invention, the lubricating member comprises a lubricating material and an electrically a lubricating material conductive material which is welded on the closing member.

Further, according to the invention, the electrically conductive material comprises electrically conductive plates, the lubricating material comprises lubricating plates, and the lubricating member is made by alternatively stacking the electrically conductive plates and the lubricating plates.

Further, according to the invention, the closing member has a crenellated face, and the lubricating member is press-fit on the crenellated face.

Further, according to the invention, the first separating plate is provided with a hole, and the closing member is provided with a hole, and is temporarily fixed onto the first separating plate by inserting a temporary fixing member which is made of a combustible material into the holes.

Further, according to the invention, when the closing member closes the clearance, the hole of the first separating plate is closed with the closing member while the hole of the closing member is closed with the first separating plate.

Further, according to the invention, the closing member engages with an inner wall face of the first pipe to temporarily fix the closing member onto the first separating plate before the closing member closes the clearance.

Further, according to the invention, the first pipe has a spherical top face, the second pipe has a spherical top face which is complementary to the spherical top face of the first pipe, and the spherical top face of the first pipe is in contact with the spherical top face of the second pipe when the first and second pipes are connected to each other.

Further, according to the invention, the closing member is released by an exhaust gas flowing through the passages.

The present invention may be more fully understood from the description of the preferred embodiments of the invention set forth below, together with the accompanying drawings.

### BRIEF DESCRIPTION OF THE DRAWINGS

In the drawings:
Fig. 1 is a cross section of a connecting device according to the first embodiment of the invention when a closing member is temporarily fixed on an upstream separating plate;
Fig. 2 is a cross section along the line II-II in Fig. 1;
Fig. 3 is a cross section along the line III-III in Fig. 1;
Fig. 4 is a perspective view of a closing member according to the first embodiment;
Fig. 5 is a cross section of the connecting device according to the first embodiment of the invention when the temporary fixing of the closing member on the upstream separating plate is released;
Fig. 6 is a perspective view of a modified closing member;
Fig. 7 is a cross section of the connecting device when the temporary fixing of the modified closing member on the upstream separating plate is released;
Fig. 8 is a cross section of a lubricating member received by the closing member according to the second embodiment of the invention;
Fig. 9 is a perspective view of the closing member according to the third embodiment of the invention;
Fig. 10 is an elevational view of the closing member according to the third embodiment of the invention;
Fig. 11 is a perspective view of the closing member according to the fourth embodiment of the invention;
Fig. 12 is a cross section of an upstream dual exhaust pipe provided with the closing member according to the fourth embodiment of the invention;
Fig. 13 is a cross section of the connecting device according to the fifth embodiment of the invention when the closing member is temporarily fixed on the upstream separating plate;
Fig. 14 is an elevational view of a connecting plate and the upstream separating plate related thereto;
Fig. 15 is a cross section of the connecting device according to the fifth embodiment of the invention when the temporary fixing of the closing member on the upstream separating plate is released;
Fig. 16 is a cross section of the connecting device according to the sixth embodiment of the invention when the temporary fixing of the closing member on the upstream separating plate is released.

### DESCRIPTION OF THE PREFERRED EMBODIMENTS

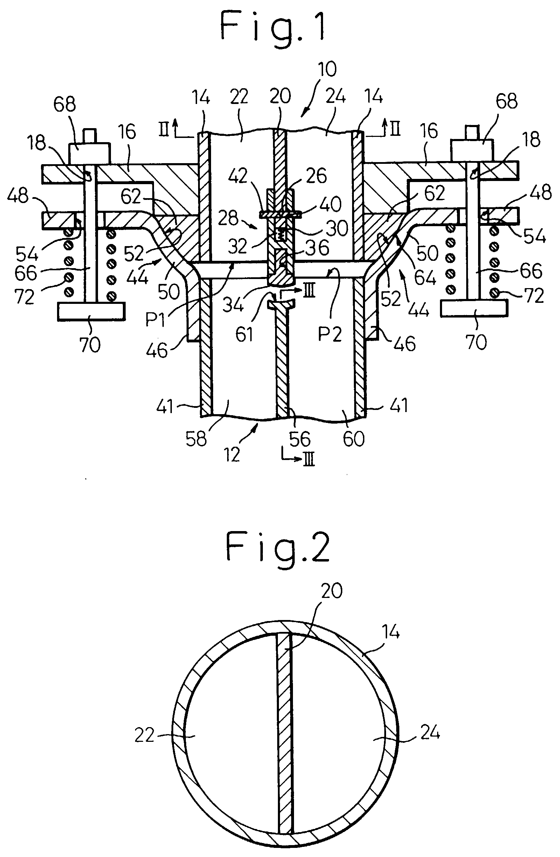

A connecting device for connecting exhaust pipes to each other according to the first embodiment of the invention will be explained below by referring to Figs. 1 to 5.

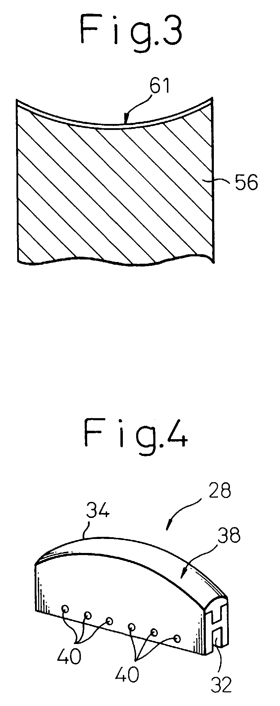

Fig. 1 shows the connecting device when the connecting device has not yet completely connected exhaust pipes to each other while Fig. 4 shows the connecting device when the connecting device has completely connected exhaust pipes to each other.

In Fig. 1, the reference number 10 indicates an upstream exhaust pipe which is connected to an engine body (not shown). The reference number 12 indicates a downstream exhaust pipe to be connected to the upstream exhaust pipe 10.

In the specification, the terms "upstream" and "downstream" are used on the basis of the flow of the exhaust gas from the engine body.

The upstream exhaust pipe 10 is provided with an upstream flange 16 which radially and outwardly extends from a cylindrical wall 14 of the upstream exhaust pipe 10. At the outer peripheral portion of the upstream flange 16, a plurality of upstream bolt holes 18 are formed.

As shown in Fig. 2, the interior of the upstream exhaust pipe 10 is divided into two passages 22 and 24 by means of an upstream separating plate 20.

The top end of the upstream separating plate 20 is within the plane P1 including the top end surface of the cylindrical wall 14 of the upstream exhaust pipe 10. Briefly, the top end of the upstream separating plate 20 is within the interior of the upstream exhaust pipe 10.

The downstream exhaust pipe 12 is provided with a downstream flange 44 which radially and outwardly extends from a cylindrical wall 41 of the downstream exhaust pipe 12. The downstream flange 44 comprises a mounting portion 46 to be mounted to the cylindrical wall 41 of the downstream exhaust pipe 12, a flange portion 48 extending radially and outwardly, and a connecting portion 50 for connecting the mounting portion 46 and the flange portion 48 to each other.

A plurality of downstream bolt holes 54 are formed on the flange portion 48. The downstream bolt holes 54 are aligned with the upstream bolt holes 18, respectively when the exhaust pipes 10 and 12 are connected to each other.

The connecting portion 50 has a spherical inner wall face 52 which is directed toward the upstream exhaust pipe 10 when the exhaust pipes 10 and 12 are connected to each other.

The interior of the downstream exhaust pipe 12 is divided into two passages 58 and 60 by means of a downstream separating plate 56. The top end of the downstream separating plate 56 has a T-shaped cross section so that the top face 61 of the top end of the downstream separating plate 56 has a width greater than the thickness of the downstream separating plate 56.

As shown in Fig. 3, the top face 61 is included in the spherical surface including the inner wall face 52 of the connecting portion 50.

The top end of the downstream separating plate 56 is within the plane P2 including the top end surface of the cylindrical wall 41 of the downstream exhaust pipe 12. Briefly, the top end of the downstream separating plate 56 is within the interior of the downstream exhaust pipe 12.

As shown in Fig. 4, the connecting device comprises a closing member 28 for closing a clearance formed between the separating plates 20 and 56. The closing member 28 has a H-shaped cross section, and comprises a spring receiving groove 32 for receiving a spring 30 as a biasing means and the top end of the upstream separating plate 20. The closing member 28 also comprises a lubricating member receiving groove 36 for receiving a lubricating member 34. Further, the closing member 28 is made of metal which can withstand the high temperature of the exhaust gas flowing the exhaust pipes 10 and 12.

The lubricating member 34 is made by hardening a lubricating material, such as expanded graphite, around a wire mesh and as a supporting body. The expanded graphite is made by heating or chemically processing a carbon black, or rapidly reducing the pressure of a highly compressed carbon black to make the distance between layers of the carbon black wider to increase the lubrication property of the lubricating material.

Therefore, the lubricating member 34 has an electrical conductivity so that the lubricating member 34 is welded to a wall defining the lubricating member receiving groove 36.

The lubricating member 34 has a spherical top face which has the same radius as that of the spherical surface including the inner wall face 52 of the connecting portion 50.

Temporary fixing holes 40 are provided on a pair of opposing side walls of the closing member 28, the side walls forming the spring receiving groove 32 therebetween.

The exhaust pipes 10 and 12 are connected to each other as follows. The closing member 28 is positioned on the top end of the upstream separating plate 20 with the spring 30 being received in the spring receiving groove 32. At this time, the temporary fixing holes 40 of the closing member 28 are aligned with the temporary fixing holes 26 of the upstream separating plate 20, respectively. Then, temporary fixing members or rods 42 are inserted through the temporary fixing holes 26 and 40, respectively, whereby the closing member 28 is temporarily fixed onto the top end of the upstream separating plate 20. At this time, the closing member 28 is withdrawn into the interior of the upstream exhaust pipe 10, and temporarily fixed on the upstream separating plate 20 with the spring 30 is compressed.

The temporary fixing members 42 are made of combustible wax, wood, resin or plastic.

Then, the upstream exhaust pipe 10 is connected to the downstream exhaust pipe 12, whereby the upstream separating plate 20 is butted to the downstream separating plate 56 with a gasket 62 being positioned on the top end of the cylindrical wall 14 of the upstream exhaust pipe 10. At this time, each of the upstream bolt holes 18 is aligned with the corresponding downstream bolt hole 54. Further, the gasket 62 is located between the upstream flange 16 and the connecting portion 50 of the downstream flange 44. The spherical surface 64 of the gasket 62 facing the connecting portion 50 of the downstream flange 44 fits the inner wall face 52 of the connecting portion 50.

Bolts 66 are inserted into the upstream and downstream bolt holes 18 and 54 respectively with a connecting spring 72 as biasing means being positioned between the head of the bolt 66 and the downstream flange 44. A nut 68 is screwed on the bolt 66, thereby the upstream flange 16 is completely connected to the downstream flange 44. At this time, the spherical surface 64 of the gasket 62 is sealed with the inner wall face 52 of the connecting portion 50 so that the upstream exhaust pipe 10 is connected to the downstream exhaust pipe 12 in the condition that the interiors of the dual exhaust pipes 10 and 12 are sealed to the outside air.

The exhaust pipes 10 and 12 are biased toward each other by the biasing force of the connecting spring 72. Therefore, when the exhaust pipes 10 and 12 vibrate, one of the exhaust pipes 10 and 12 can move relative to the other exhaust pipe along the spherical face 64 of the gasket 62 or the inner wall face 52 of the connecting portion 50 while the spherical face 64 of the gasket 62 is sealed with the inner wall face 52 of the connecting portion 50. Thus, the exhaust pipes 10 and 12 cannot be damaged when these pipes vibrate.

The above mentioned type of the connecting device is called a ball joint.

When the exhaust pipes 10 and 12 are connected to each other, the closing member 28 is temporarily fixed on the upstream separating plate 20 by the temporary fixing member 42 so that the closing member 28 is withdrawn into the interior of the upstream exhaust pipe 10. Therefore, the lubricating member 34 on the closing member 28 is not in contact to the top end surface 61 of the downstream separating plate 56.

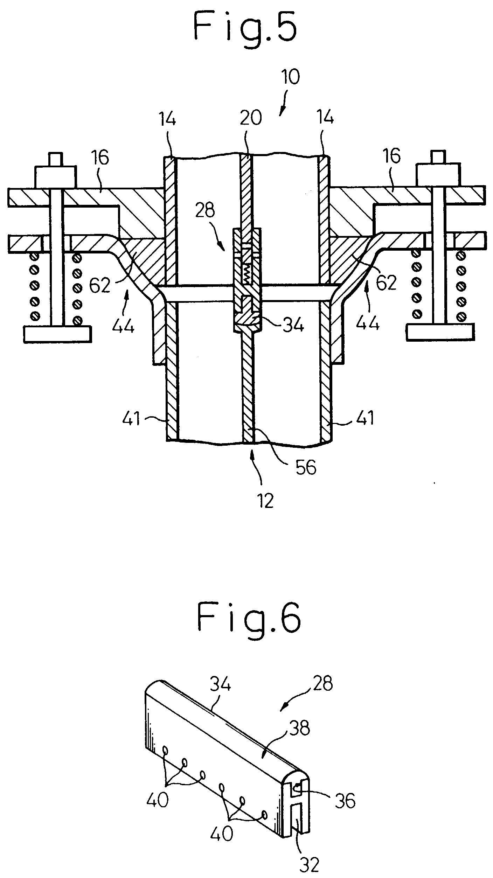

When the engine is driven, the hot exhaust gas flows through the exhaust passages 22, 24, 58 and 60. Since the temporary fixing member 42 is made of a combustible material, the temporary fixing member 42 is burned off by the heat of the exhaust gas. Therefore, the temporary fixing of the closing member 28 is released. Then, as shown in Fig. 5, the closing member 28 is forced toward the downstream separating plate 56 by the biasing force of the spring 30 so that the lubricating member 34 comes into contact with the top face 61 of the downstream separating plate 56. Therefore, the exhaust pipes 10 and 12 are fully connected by the connecting device. Once the closing member 28 comes into contact with the top face 61, the spring 30 continues to force the closing member 28 against the top face 61 of the downstream separating plate 56.

The temporary holes 40 and 26 are formed in such a manner that the temporary holes 40 of the closing member 28 can be closed by the upstream separating plate 20 and the temporary holes 26 of the upstream separating plate 20 can be closed by the side walls of the closing member 28 when the temporary fixing of the closing member 28 is released. Therefore, the exhaust passages 22 and 24 are isolated from the exhaust passages 58 and 60 by means of the closing member 28.

The operation of the connecting device according to the first embodiment of the invention will be explained below.

The connecting portion 50 of the downstream flange 44 is moved relative to the gasket 62 when the exhaust pipes are vibrated due to the operation of the engine. At this time, the closing member 28 is also moved with respect to the downstream separating plate 56 due to the vibration of the closing member 28. The closing member 28 can move along the axis of the upstream exhaust pipe 10. Therefore, the closing member 28 is relatively movable with respect to both the separating plates. Further, the lubricating member 34 of the closing member 28 can move along the top face of the downstream separating plate 56 according to the movement of the spherical face 64 of the gasket relative to the inner wall face 52 of the connecting portion 50.

The closing member 28 is forced against the downstream separating plate 56 so that the exhaust passages 22 and 58 are sealed from the exhaust passages 24 and 60 even if the closing member 28 is vibrated or moved.

Further, since the closing member 28 has the lubricating member 34 and the lubricating member 34 has a spherical top face 38, the closing member 28 will not damage the top face 61 of the downstream separating plate 56 even when the closing member 28 is moved relative to the downstream separating plate 56.

Further, since the lubricating member 34 is securely fixed on the closing member 28 by welding, the lubricating member 34 will not be removed from the closing member 28 by the vibration of the closing member 28.

Further, since the spring 30 is not exposed to the hot exhaust gas, the deterioration of the spring 30 is prevented.

Further, since the closing member 28 can be moved relative to the downstream separating plate 56 by the vibration of the exhaust pipes 10 and 12, and the friction between the top face 38 of the lubricating member 34 and the top face 61 of the downstream separating plate 56 is small, the generation of the noise is prevented.

Further, since the surface area of the top face 61 of the downstream separating plate 56 is large, the closing member 28 will not leave the top face 61 of the downstream separating plate 61 even when the closing member 28 is largely moved relative to the downstream separating plate 56.

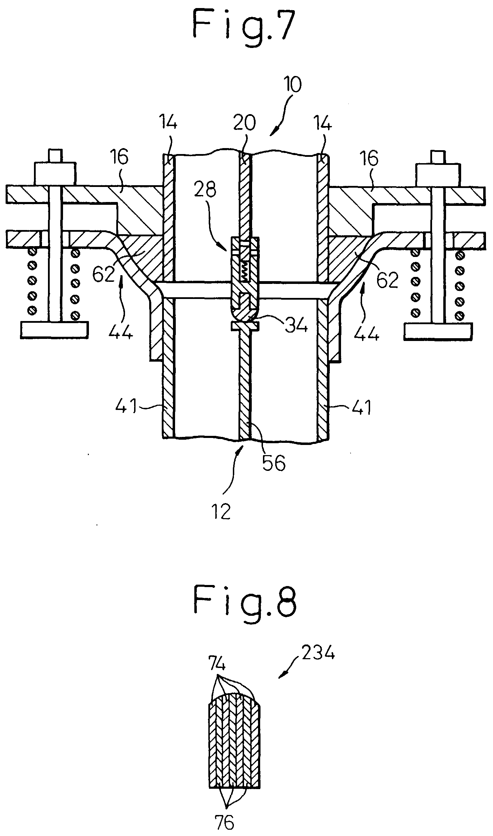

As shown in Fig. 6, to simplify the structure of the closing member, the closing member 28 may have a cylindrical top face 38, and as shown in Fig. 7, the downstream separating plate 61 may have a flat top face 61.

Further, although the spring 30 is a type of the coil spring, a torsion spring or a plate spring may be used.

In the first embodiment, the lubricating member is made of the expanded graphite and the wire mesh which is made of steel. Therefore, according to the second embodiment, there is provided a lubricating member having a hardness and a rigidity higher than the combination of the expanded graphite and the wire mesh.

As shown in Fig. 8, the lubricating member 34' according to the second embodiment is made by alternatively stacking rigid plates 74 having a rigidity and an electrical conductivity and the lubricating plates 76 made of the lubricating material. Since the rigid plate 74 is more rigid than the wire mesh, the rigidity of the lubricating member 34' is higher than that of the lubricating member 34 according to the first embodiment.

The lubricating member 34' is welded to the inner wall face defining the lubricating receiving groove 36. Components other than those described above are the same as those of the connecting device according to the first embodiment. Therefore, an explanation thereof will not be given. Note that a plurality of holes may be formed in the rigid plate for decreasing the weight of the lubricating member.

In the first embodiment, the lubricating member is welded to the inner wall defining the lubricating member receiving groove. The welding operation increases the manufacturing cost of the closing member. Therefore, according to the third embodiment, there is provided a closing member having a lubricating member which is fixed on the closing member at a lower cost.

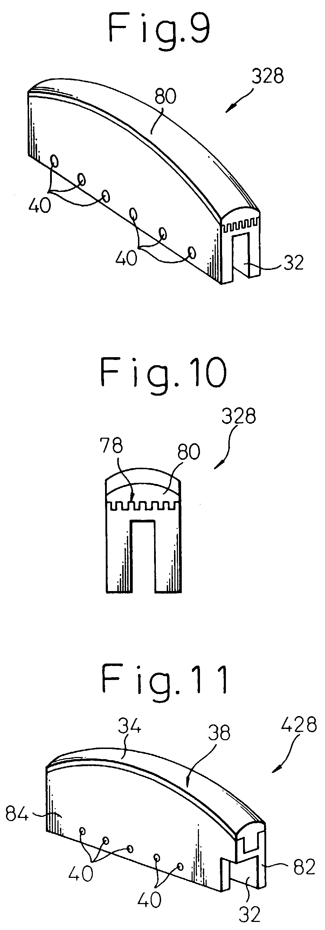

As shown in Figs. 9 and 10, according to the third embodiment, the closing member 328 is provided with a crenellated face instead of the lubricating member receiving groove. The crenellated face 78 is formed by the corrosion of the metal material constituting a part of the closing member 328.

The lubricating member 80 is adhered or press-fit to the crenellated face 78.

Since the lubricating member 80 is securely held by the crenellated face 78, the lubricating member 80 will not leave the closing member 328 even when the exhaust pipes 10 and 12 vibrate. Therefore, the lubricating member can be fixed on the closing member at a low cost.

Components other than those described above are the same as those of the connecting device according to the second embodiment. Therefore, an explanation thereof will not be given.

In the first embodiment, the side ends of the separating plate are flat. However, to simplify the assembly of the exhaust pipe, the separating plate having the rounded side ends can be used. If the connecting device according to the first embodiment is applied to such an exhaust pipe, the exhaust passages formed in the dual exhaust pipe are in communication with each other through clearances formed around the side ends of the closing member. Therefore, according to the fourth embodiment, there is provided a closing member which can be applied to the dual exhaust pipe which has the rounded side ends to prevent the communication between the exhaust passages of the exhaust pipe.

As shown in Fig. 11, one of the side walls of the closing member 428 which define the spring receiving groove 32 is cut at its one end. Further, the other side wall of the closing member 428 is cut at its one end which is opposite to the one side wall of the closing member 428. Therefore, the cutouts of the side walls of the closing member 428 are offset along the length of the closing member 428.

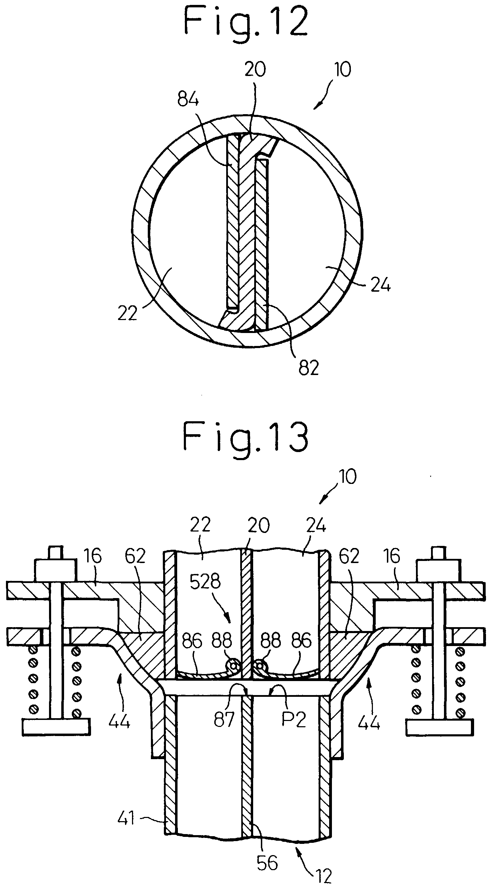

As shown in Fig. 12, the closing member 428 is mounted on the upstream separating plate 20. The side ends of the upstream separating plate 20 are rounded in the opposite directions. One of the side walls of the closing member 428 covers the back face of one of the rounded side ends of the upstream separating plate 20. The other side wall of the closing member 428 covers the back face of the other rounded side end of the upstream separating plate 20. Therefore, according to the fourth embodiment, the communication between the exhaust passages of the exhaust pipes is prevented.

Components other than those described above are the same as those of the connecting device according to the first embodiment. Therefore, an explanation thereof will not be given.

In the first embodiment, the structure of the closing member and the mechanism of the temporary fixing of the closing member on the upstream separating plate are complicated. Therefore, according to the fifth embodiment, there is provided a closing member having a simple structure.

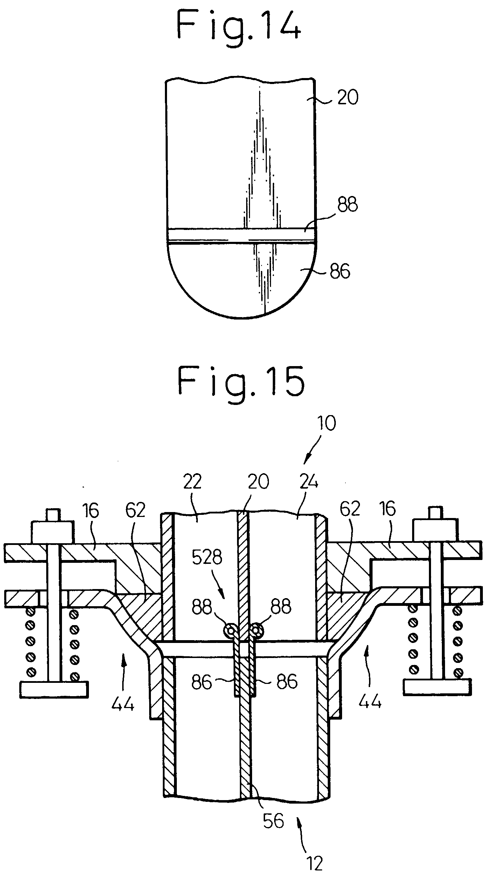

Figs. 13 to 15 show the connecting device according to the fifth embodiment of the invention. Fig. 13 shows the connecting device before the connection between the exhaust pipes is completed. Fig. 15 shows the connecting device after the connection between the exhaust pipes is completed.

The closing member 528 according to the fifth embodiment comprises a pair of closing plates 86. The closing plates 86 are semi-circular. The downstream separating plate has a flat end face and has a constant thickness, i.e., has no T-shaped cross section. Therefore, the end face 87 of the downstream separating plate 56 is located on the surface P2.

The closing plates 86 are rotatably mounted on the upstream separating plate 20. Before the connection between the exhaust pipes 10 and 12 are completed, the closing plates 86 temporarily engage or bite into the inner cylindrical wall of the upstream exhaust pipe 10. At this time, the closing plates 86 are biased by mounting portions 88 thereof to rotate the closing plates 86 toward the downstream separating plate 56.

When the engine is driven, the exhaust gas flows against the closing plates 86, and forces the closing plates 86 downward. At this time, as shown in Fig. 15, the temporary fixing of the closing plates 86 on the upstream separating plate 20 is released so that the closing plates 86 can be rotated toward the downstream separating plate 56 by the biasing force of the mounting portions 88. Therefore, the closing plates 86 close a clearance formed between the separating plates.

According to the fifth embodiment, the closing plates 86 can be moved and rotated with at least one of the closing plates 86 being in contact with the downstream separating plate 56 when the exhaust pipes 10 and 12 vibrate. Therefore, the closing plates 86 will not damage the downstream separating plate 56 when the exhaust pipes 10 and 12 vibrate. Further, the exhaust passages are sealed from each other when the exhaust pipes 10 and 12 vibrate.

Components other than those described above are the same as those of the connecting device according to the first embodiment. Therefore, an explanation thereof will not be given.

A connecting device according to the sixth embodiment of the invention will be explained below.

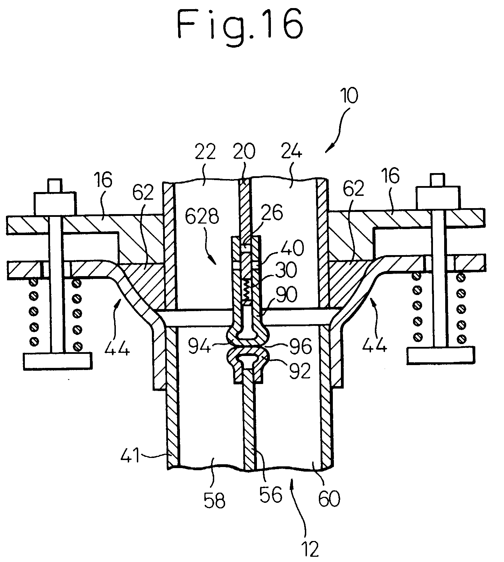

As shown in Fig. 16, the closing member 628 comprises a rounded plate 90 at its top face. Further, the downstream separating plate 56 comprises a rounded plate 92 at its top end.

The spherical top face 94 of the closing member 628 has the same radius as the sphere surface including the inner wall face 52 of the connecting portion 50. Further, the spherical top face 96 of the downstream separating plate 56 is sized and shaped in such a manner that the spherical top face 96 can come into contact with the spherical top face 94 of the closing member 628 and can isolate the exhaust passages 22 and 58 from the exhaust passages 60 and 24 when the temporary fixing of the closing member 628 on the upstream separating plate 20 is released.

According to the sixth embodiment, the connecting device is simpler than that in the first embodiment.

Components other than those described above are the same as those of the connecting device according to the first embodiment. Therefore, an explanation thereof will not be given.

In the above description, the ball joint type of the connecting device is illustrated. However, the invention can apply to the other type of the connecting device. Further, according to the invention, the end face of the lubricating member is tailored to fit the end face of the separating plate to be in contact with the lubricating member.

Further, the temporary fixing member may be relieved by the vibration of the dual exhaust pipes.

While the invention has been described by reference to specific embodiments chosen for purposes of illustration, it should be apparent that numerous modifications can be made thereto by those skilled in the art without departing from the basic concept and scope of the invention.

According to the present invention, there is provided a connecting device for connecting a first pipe, the passage of which is divided into two passages by a first separating plate, to a second pipe, the passage of which is divided into two passages by a second separating plate. The connecting device comprises a closing member for closing a clearance formed between the first and second separating plates when the first and second pipes are connected to each other, the closing member being relatively movable with respect to both the first and second separating plates.

## Claims

1. A connecting device for connecting a first pipe, the passage of which is divided into two passages by a first separating plate, to a second pipe, the passage of which is divided into two passages by a second separating plate, comprising:
a closing member for closing a clearance formed between said first and second separating plates when said first and second pipes are connected to each other, said closing member being relatively movable with respect to both said first and second separating plates.

2. A connecting device according to claim 1, wherein said closing member is movably mounted on an end of said first separating plate, is in contact with a top end of said second separating plate when said first and second pipes are connected to each other, and is movable in a longitudinal direction of said first separating plate.

3. A connecting device according to claim 2, wherein said closing member has a spherical top face, said second separating plate has a spherical top face which is complementary to said spherical top face of said closing member, and said spherical top face of said closing member is in contact with said spherical top face of said second separating plate when said first and second pipes are connected to each other.

4. A connecting device according to claim 2, wherein said, closing member has a cylindrical top face, said second separating plate has a flat top face, and said cylindrical top face of said closing member is in contact with said flat top face of said second separating plate when said first and second pipes are connected to each other.

5. A connecting device according to claim 1, wherein said closing member is movably mounted on an end of said first separating plate, is in contact with said second separating plate when said first and second pipes are connected to each other, and is rotatably movable with respect to said first separating plate.

6. A connecting device according to claim 1, wherein said closing member is supported on an end of said first separating plate by means of biasing means for biasing said closing member toward said second separating plate.

7. A connecting device according to claim 6, wherein said biasing means comprises a spring.

8. A connecting device according to claim 7, wherein said closing member is provided with a groove for receiving said spring therein.

9. A connecting device according to claim 1, wherein said closing member comprises a lubricating member to be in contact with said second separating plate when said first and second pipes are connected to each other.

10. A connecting device according to claim 9, wherein said lubricating member comprises a lubricating material and an electrically conductive material which is welded onto said closing member.

11. A connecting device according to claim 10, wherein said electrically conductive material comprises electrically conductive plates, said lubricating material comprises lubricating plates, and said lubricating member is made by alternatively stacking said electrically conductive plates and said lubricating plates.

12. A connecting device according to claim 9, wherein said closing member has a crenellated face, and said lubricating member is press-fit on said crenellated face.

13. A connecting device according to claim 1, wherein said closing member is temporarily fixed onto said first separating plate so that said clearance exists before said closing member closes said clearance.

14. A connecting device according to claim 13, wherein said first separating plate is provided with a hole, and said closing member is provided with a hole, and is temporarily fixed onto said first separating plate by inserting a temporary fixing member which is made of a combustible material into said holes.

15. A connecting device according to claim 14, wherein when said closing member closes said clearance, said hole of said first separating plate is closed with said closing member while said hole of said closing member is closed with said first separating plate.

16. A connecting device according to claim 13, wherein said closing member engages with an inner wall face of said first pipe to temporarily fix said closing member onto said first separating plate before said closing member closes said clearance.

17. A connecting device according to claim 1, wherein said first pipe has a spherical top face, said second pipe has a spherical top face which is complementary to said spherical top face of said first pipe, and said spherical top face of said first pipe is in contact with said spherical top face of said second pipe when said first and second pipes are connected to each other.

18. A method for connecting a first pipe, the passage of which is divided into two passages by a first separating plate, to a second pipe, the passage of which is divided into two passages by a second separating plate, comprising steps of:
temporarily fixing a closing member for closing a clearance formed between said first and second separating plates onto said first separating plate so that said clearance exists;
connecting said first and second pipes to each other; and
releasing said closing member to close said clearance.

19. A method according to claim 18, wherein said closing member is relatively movable with respect to both said first and second separating plates.

20. A method according to claim 19, wherein said closing member is in contact with a top end of said second separating plate when said first and second pipes are connected to each other, and is movable in a longitudinal direction of said first separating plate.

21. A method according to claim 20, wherein said closing member has a spherical end face, said second separating plate has a spherical end face which is complementary to said spherical top face of said closing member, and said spherical top face of said closing member is in contact with said spherical top face of said second separating plate when said first and second pipes are connected to each other.

22. A method according to claim 20, wherein said closing member has a cylindrical top face, said second separating plate has a flat top face, and said cylindrical top face of said closing member is in contact with said flat top face of said second separating plate when said first and second pipes are connected to each other.

23. A method according to claim 19, wherein said closing member is in contact with said second separating plate when said first and second pipes are connected to each other, and is rotatably movable with respect to said first separating plate.

24. A method according to claim 19, wherein said closing member is supported on an end of said first separating plate by means of biasing means for biasing said closing member toward said second separating plate.

25. A method according to claim 24, wherein said biasing means comprises a spring.

26. A method according to claim 25, wherein said closing member is provided with a groove for receiving said spring therein.

27. A method according to claim 19, wherein said closing member comprises a lubricating member to be in contact with said second separating plate when said first and second pipes are connected to each other.

28. A method according to claim 27, wherein said lubricating member comprises a lubricating material and an electrically conductive material which is welded onto said closing member.

29. A method according to claim 28, wherein said electrically conductive material comprises electrically conductive plates, said lubricating material comprises lubricating plates, and said lubricating member is made by alternatively stacking said electrically conductive plates and said lubricating plates.

30. A method according to claim 27, wherein said closing member has a crenellated face, and said lubricating member is press-fit on said crenellated face.

31. A method according to claim 18, wherein said first separating plate is provided with a hole, and said closing member is provided with a hole, and is temporarily fixed onto said first separating plate by inserting a temporally fixing member which is made of a combustible material into said holes.

32. A method according to claim 31, wherein when said closing member closes said clearance, said hole of said first separating plate is closed with said closing member while said hole of said closing member is closed with said first separating plate.

33. A method according to claim 30, wherein said closing member engages with an inner wall face of said first pipe to temporarily fix said closing member onto said first separating plate before said closing member closes said first clearance.

34. A method according to claim 18, wherein said first pipe has a spherical top face, said second pipe has a spherical top face which is complementary to said spherical top face of said first pipe, and said spherical top face of said first pipe is in contact with said spherical top face of said second pipe when said first and said second pipes are connected to each other.

35. A method according to claim 18, wherein said closing member is relieved by an exhaust gas flowing through said passages.
